# EUROPÄISCHE PATENTANMELDUNG

(11) **EP 4 062 808 A2**
(43) Veröffentlichungstag der Anmeldung: **28.09.2022**
(21) Anmeldenummer: 22160313.7
(22) Anmeldetag: 04.03.2022
(51) Int. Cl.: A47J 31/44, A47J 31/46

(54) **MILCHSCHÄUMER UND HEISSGETRÄNKEZUBEREITUNGSEINRICHTUNG**

(30) Priorität: 23.03.2021 DE 102021202787
(71) Anmelder: BSH Hausgeräte GmbH, 81739 München (DE)
(72) Erfinder: Henz, Manuel, 83410 Laufen (DE); Leonhardt, Ronny, 70839 Gerlingen (DE); Steininger, Benedikt, 83253 Rimsting (DE)

(57) **Zusammenfassung**

Die vorliegende Erfindung betrifft einen Milchschäumer (1) zum Aufschäumen von Milch für eine Heißgetränkezubereitungseinrichtung (2), insbesondere für einen Kaffeeautomaten (3).

Um auch einem Laien einen sogenannten Barista-Modus bieten zu können, ist eine Einstellanordnung (4) zum Variieren einer Beschaffenheit von Milchschaum vorgesehen, wobei die Einstellanordnung (4) eine erste Einstelleinrichtung (5) und/oder eine zweite Einstelleinrichtung (13) aufweist, wobei über die erste Einstelleinrichtung (5) eine Einstellung eines einer Mischkammer (6) des Milchschäumers (1) zuzuführenden Luftstroms möglich ist, während über die zweite Einstelleinrichtung (13) eine Einstellung eines der Mischkammer (6) zuzuführenden Milchstroms möglich ist.

## Beschreibung

Die Erfindung betrifft einen Milchschäumer sowie eine Heißgetränkezubereitungseinrichtung mit einem solchen Milchschäumer.

Gängige Kaffeeautomaten werden seit geraumer Zeit mit Milchschäumern ausgestattet, mittels welcher Milch zu Milchschaum aufgeschäumt werden kann. Das Aufschäumen der Milch im Milchschäumer erfolgt dabei typischerweise durch Vermengen eines Gemischs aus Luft, Milch und Wasserdampf, welcher zum Fördern des Gemischs aus Luft und Milch als Treibmedium einer Strahlpumpe des Milchschäumers verwendet wird. Der Wasserdampf dient dabei zugleich zum Erwärmen des Gemischs aus Luft und Milch auf eine Schäumtemperatur.

Die Vorteile von Kaffeeautomaten gegenüber Filterkaffeemaschinen sind insbesondere die schnelle Zubereitung und die verschiedenen Einstellmöglichkeiten von Tasse zu Tasse hinsichtlich Kaffeeintensität und Temperatur. Ein weiterer Vorteil ist die automatische Erzeugung von Mixgetränken, sprich Kaffee mit warmer Milch bzw. Milchschaum. Hierzu muss lediglich ein zusätzlicher Behälter mit Milch bereitgestellt und an das System gekoppelt werden. Die Milch besitzt in der Regel keinen eigenen Heizkreislauf und wird daher über den im Gerät erzeugten Dampf erhitzt. Unter Zuschaltung eines Luftstroms wird Milchschaum erzeugt, sodass Getränke wie Cappuccino und Latte Macchiato per Knopfdruck erzeugt werden können. Die Konsistenz und Qualität des Milchschaums sind dabei durch vorgegebene geometrische Parameter meist vorbestimmt. Eine komplette Steuerung des Milchflusses, der Milchtemperatur oder des Luftstroms findet sich nur einzeln als Eigenkomponente aufgeführt bei Haushaltsgeräten und als Ganzes nur bei Profigeräten im Gastronomiebereich, wofür einige zusätzliche Schalt- und Messkomponenten eingesetzt werden. Beispielsweise wird die Milch durch ein eigenes Fluidsystem geführt, in dem sie gesteuert oder auch aufgeheizt wird.

Nachteilig bei bekannten Milchschäumern aus dem Consumerbereich ein Barista-Modus, bei dem die Konsistenz und Qualität des Milchschaums individuell angepasst werden können, zwar zunehmend gewünscht ist, mit den derzeitig für den Consumerbereich vorgesehenen Milchschäumern jedoch nicht angeboten werden kann.

Die vorliegende Erfindung beschäftigt sich daher mit dem Problem, einen Milchschäumer für den Consumerbereich anzugeben, der insbesondere die aus dem Stand der Technik bekannten Nachteile überwindet.

Dieses Problem wird erfindungsgemäß durch den Gegenstand des unabhängigen Anspruchs 1 gelöst. Bevorzugte Ausführungsformen sind Gegenstand der abhängigen Ansprüche.

Die vorliegende Erfindung beruht auf dem allgemeinen Gedanken, erstmals eine konstruktiv einfache und vergleichsweise einfach zu bedienende Einstellanordnung zum Einstellen und Variieren einer Beschaffenheit eines Milchschaums bei einem Milchschäumer anzugeben, wodurch ein bislang nahezu ausschließlich für Profigeräte im Gastronomiebereich vorbehaltener Barista-Modus nun erstmals auch kostengünstig in den Consumerbereich übertragen werden kann und dort einen lang gehegten Wunsch nach einem derartigen Barista-Modus erfüllt. Der erfindungsgemäße Milchschäumer zum Aufschäumen von Milch für eine Heißgetränkezubereitungseinrichtung, beispielsweise einen Kaffeeautomaten, besitzt die genannte Einstellanordnung, die wiederum eine erste und/oder eine zweite Einstelleinrichtung umfasst. Über die erste Einstelleinrichtung ist eine Einstellung eines einer Mischkammer des Milchschäumers zuzuführenden Luftstroms möglich, während über die zweite Einstelleinrichtung eine Einstellung des der Mischkammer zuzuführenden Milchstroms möglich ist. Sowohl mit der ersten Einstelleinrichtung als auch mit der zweiten Einstelleinrichtung lässt sich der Milchschaum vergleichsweise einfach an individuelle Kundenwünsche und/oder Getränkearten, wie beispielsweise Cappuccino, Latte Macchiato, Flat White, etc. anpassen und dementsprechend einstellen. Insbesondere lassen sich mit der erfindungsgemäßen Einstellanordnung eine Schaumhöhe, eine Milchtemperatur und eine Milchschaumkonsistenz entweder nach Einweisung oder durch Ausprobieren auch von Verbraucherinnen und Verbrauchern beeinflussen. Da Milchschaum sowie dessen Eigenschaften stark von einer anteiligen Zusammensetzung des Gemischs aus Milch, Luft und Dampf abhängig sind, lässt sich mit der in den nächsten Absätzen beschriebenen ersten und/oder zweiten Einstelleinrichtung analog zu einem Barista manuell Einfluss auf die Qualität und Konsistenz des Milchschaums nehmen.

Bei einer vorteilhaften Weiterbildung des erfindungsgemäßen Milchschäumers münden in die Mischkammer desselben eine Dampfzuführleitung und eine Milchzuführleitung, wobei zudem eine erste Luftzuführleitung vorgesehen ist, die in die Milchzuführleitung mündet. Zudem ist ein Zentralventil vorgesehen, über welches sowohl eine Dampfzufuhr in der Dampfzuführleitung als auch eine Luftzufuhr in der ersten Luftzuführleitung einstellbar sind. Bei dieser Ausführungsform ist nun eine zweite, das Zentralventil umgehende Luftzuführleitung vorgesehen, die stromab des Zentralventils, das heißt danach, und stromauf der Milchzuführleitung in die erste Luftzuführleitung mündet und wobei in dieser zweiten Luftzuführleitung die erste Einstelleinrichtung zur Einstellung eines Luftstromes in der zweiten Luftzuführleitung und darüber auch zur Einstellung eines der Mischkammer zuzuführenden Luftstroms angeordnet ist. Konkret wird also in diesem Fall ein Bypass zum Zentralventil geschaffen, der bei Bedarf dazu geschaltet werden kann und gegebenenfalls sogar eine komplette Luftzufuhr beim Milchschäumen, sofern das Zentralventil auf Blockstellung (Stellung 6) steht, übernimmt.

Die Dosierung der Luftmenge mittels der ersten Einstelleinrichtung kann dabei über eine einstellbare Blende oder Düse oder ein schaltbares Ventil umgesetzt werden. Dieses Ventil bzw. die Blende oder Düse kann dabei mehrmals je Sekunde öffnen und schließen und dadurch einen variablen Luftfluss erzeugen. Durch die zusätzliche Einstellbarkeit des der Mischkammer zuzuführenden Luftstroms über die erste Einstelleinrichtung in der zweiten Luftzuführleitung lässt sich der Milchschäumprozess deutlich besser steuern bzw. beeinflussen und insbesondere auch auf unterschiedlichste Milcharten mit individuellem Fettgehalten oder Milchalternativen, wie beispielsweise Soja, Hafer, etc. anpassen und dadurch optimieren und verbessern.

Hierbei ist es selbstverständlich denkbar, dass durch eine geeignete Kundeninteraktion, beispielsweise durch eine entsprechende Anleitung in einem Display oder entsprechende Fragestellungen der Milchschäumprozess auch im Hintergrund automatisch von dem Kaffeeautomaten eingestellt werden kann, um die Kundenzufriedenheit zu erhöhen. Hierdurch ist es möglich, optimal auf Umwelteinflüsse, wie beispielsweise unterschiedliche Milchsorten bzw. Milchalternativen zu reagieren.

Eine derartige erste Einstelleinrichtung in der zweiten Luftzuführleitung ermöglicht darüber hinaus auch eine Kalibrierung bei einem End-Off-Line-Test, wodurch es möglich ist, Fertigungstoleranzen auszugleichen und eine gleichbleibend hohe Gerätequalität für den Kunden zu gewährleisten. Darüber hinaus ist auch denkbar, dass diese erste Einstelleinrichtung Umwelteinflüsse oder ein Abnutzungsverhalten über die Lebensdauer durch ein entsprechendes Nachjustieren oder Kalibrieren kompensieren kann. Bei vernetzten Milchschäumern bzw. vernetzten Kaffeeautomaten ist es darüber hinaus möglich, dass ein Kundendienst bei Problemen dem Kunden bzw. der Kundin über einen Remote-Control den Milchschäumprozess optimiert oder Softwarefehler bzw. Prozessfehler behebt. Außerdem kann diese erfindungsgemäße Lösung dazu beitragen, Kundenreklamationen zu reduzieren.

Des Weiteren ist in diesem Zusammenhang denkbar, dass ein in der ersten Luftzuführleitung bislang erforderliches Rückschlagventil entfallen kann, welches dort aufgrund eines dort entstehenden Unterdrucks bislang vorgehalten werden musste, um ein unerwünschtes Rückströmen von Schmutz oder Dampf in die erste Luftzuführleitung zu verhindern. Dieser Unterdruck entstand bislang zwischen dem Zentralventil und einem Bereich, an dem die erste Luftzuführleitung auf die Milchzuführleitung traf. Durch die nun bei dieser Ausführungsform vorgesehene zweite Luftzuführleitung und damit den Bypass zum Zentralventil kann die erste Einstelleinrichtung, welche beispielsweise als Ventil ausgebildet ist, nach Beendigung des Milchschäumprozess geöffnet werden, wodurch ein derartiger Unterdruck nicht entsteht und ein unerwünschtes Ansaugen von Schmutz oder dampf nicht befürchtet werden muss.

Bei einer vorteilhaften Weiterbildung der erfindungsgemäßen Lösung ist das Zentralventil als Keramikventil ausgebildet. Derartige Keramikventile ermöglichen eine lange Lebensdauer bei gleichzeitig hohen Schaltvorgängen.

Zweckmäßig können das Zentralventil und die erste Einstelleinrichtung zumindest nachfolgend skizzierte Stellungen mit den in der nachfolgenden Tabelle angedeuteten Ergebnissen einnehmen, wobei x einen offenen Zustand und 0 einen geschlossenen Zustand bedeutet:

| Nr. | Zentralventil | | Erste Einstelleinrichtung | Ergebnis |
|---|---|---|---|---|
| | Dampfzufuhr | Luftzufuhr | | |
| 1 | x | x | x | variabler Milchschaum "groß" |
| 2 | x | 0 | 0 | Heißmilch |
| 3 | x | 0 | x | variabler Milchschaum "klein" |
| 4 | x | x | 0 | Standard Milchschaum |
| 5 | 0 | 0 | x | Entlüftung erster + zweiter Luftzuführkanal |
| 6 | x | x | x | Blockstellung |

Bereits diese nicht abschließende Aufzählung lässt erahnen, welch mannigfaltige Einflussmöglichkeiten auf den Milchschaum mit der erfindungsgemäßen ersten Einstelleinrichtung gegeben sind. Beispielsweise kann bei der Stellung 3, bei welcher lediglich eine kleine Milchschaummenge produziert wird, durch ein mögliches Zu- und Abschalten der Luftzufuhr über die erste Einstelleinrichtung in der zweiten Luftzuführleitung ein Herstellungsprozess deutlich verbessert werden.

Zweckmäßig ist die erste Einstelleinrichtung manuell betätigbar und kann neben einer Offenstellung und einer Schließstellung auch beliebige Zwischenstellungen einnehmen. Durch diese manuelle Betätigbarkeit der ersten Einstelleinrichtung kann ein Barista-Modus geschaffen werden, bei welchem der Kunden bzw. die Kundin individuell und nach Gefühl bzw. nach Wunsch Einfluss auf den Milchschaum nehmen kann. Ein derartiger Barista-Modus ist mit bislang aus dem Stand der Technik im Consumerbereich bekannten Milchschäumern nicht möglich, jedoch gerade im Consumerbereich zunehmend gewünscht.

Bei einer weiteren vorteilhaften Ausführungsform des erfindungsgemäßen Milchschäumers weist die zweite Einstelleinrichtung einen elektrischen Rotationsantrieb und ein Steuerorgan mit Durchbrüchen auf, wobei letzteres um eine Drehachse von dem elektrischen Rotationsantrieb drehantreibbar ist. Das Steuerorgan ist dabei so in der Milchzuführleitung bzw. an einem Sauganschluss angeordnet, dass die Durchbrüche des Steuerorgans bei Rotation desselben beispielsweise den Milchzuführkanal periodisch fluidisch freigeben bzw. verschließen. Durch eine Rotationsgeschwindigkeit des Steuerorgans ist es somit möglich, individuell auf die der Mischkammer zuzuführenden Milchmenge Einfluss zu nehmen, wodurch das Mischungsverhältnis zwischen Dampf, Luft und Milch individuell beeinflussbar und dadurch auch die Parameter des hergestellten Milchschaums beeinflussbar sind.

Das Steuerorgan kann dabei eine Steuerscheibe mit axial ausgenommenen Durchbrüchen aufweisen oder einen Steuerzylinder mit axial beabstandet zueinander angeordneten, umlaufenden Reihen an Durchbrüchen unterschiedlicher Geometrie, wodurch durch eine Axialverstellung dieses Steuerzylinders in der Milchzuführleitung unterschiedliche Reihen an Durchbrüchen wahlweise mit der Milchzuführleitung in Eingriff zu bringen sind. Hierdurch ist es möglich, die Beschaffenheit des Milchschaums besonders feinstufig bzw. sogar stufenlos variieren zu können, indem beispielsweise durch eine Axialverstellung des Steuerzylinders unterschiedliche große Durchbrüche mit dem Milchzuführkanal in Eingriff gebracht werden. Eine weitere Einstellmöglichkeit bietet zudem eine einzustellende Drehzahl des elektrischen Rotationsantriebs, wodurch ebenfalls eine Milchzufuhr und dadurch die Beschaffenheit des Milchschaums feinstufig bzw. sogar stufenlos einstellbar sind.

Die vorliegende Erfindung beruht weiter auf dem allgemeinen Gedanken, eine Heißgetränkezubereitungseinrichtung, beispielsweise einen Kaffeeautomaten, mit einem in den vorherigen Absätzen beschriebenen Milchschäumer auszustatten und dadurch die zuvor beschriebenen Vorteile auf den Kaffeeautomaten zu übertragen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen erfindungsgemäßen Milchschäumer in einer erfindungsgemäßen Heißgetränkezubereitungseinrichtung mit einer in einer zweiten Milchzuführleitung angeordneten ersten Einstelleinrichtung,
- Fig. 2: einen erfindungsgemäßen Milchschäumer mit einem elektrischen Rotationsantrieb und einem als Steuerscheibe ausgebildeten Steuerorgan,
- Fig. 3: eine Darstellung wie in Fig. 1, jedoch mit einem als Steuerzylinder ausgeführten Steuerorgan,
- Fig. 4: unterschiedliche Ausführungsformen von Steuerscheiben,
- Fig. 5: unterschiedliche Ausführungsformen von Steuerzylindern,
- Fig. 6: einen Steuerzylinder mit mehreren axial beabstandet zueinander angeordneten und umlaufenden Reihen an Durchbrüchen unterschiedlicher Geometrie.

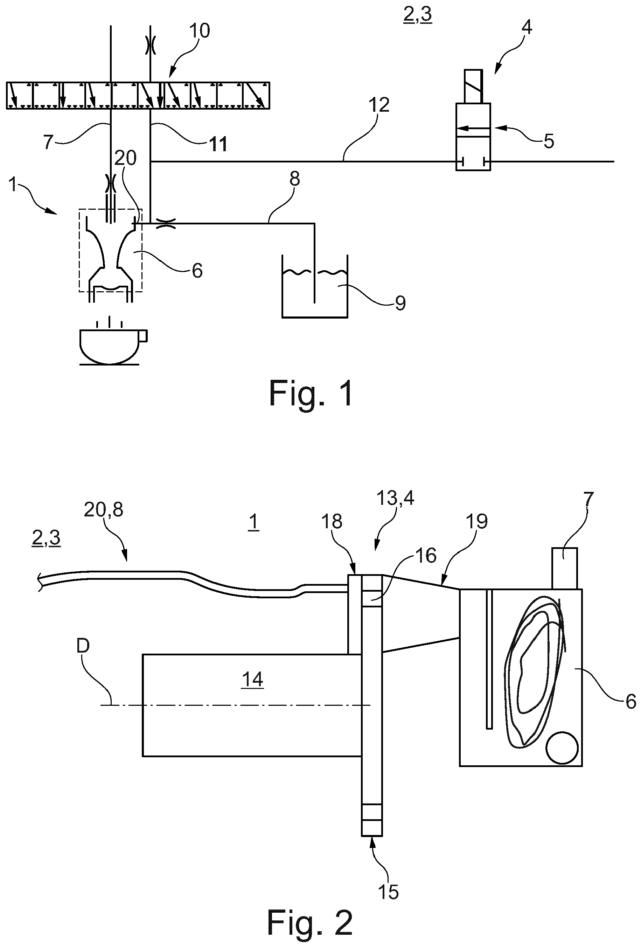

Entsprechend der Fig. 1, weist ein erfindungsgemäßer Milchschäumer 1, der in einer erfindungsgemäßen Heißgetränkezubereitungseinrichtung 2, beispielsweise einem Kaffeeautomaten 3, eingebaut sein kann, eine Einstellanordnung 4 mit einer ersten Einstelleinrichtung 5 auf. Über diese erste Einstelleinrichtung 5 ist eine Einstellung eines einer Mischkammer 6 des Milchschäumers 1 zuzuführenden Luftstroms möglich. In die Mischkammer 6 münden dabei eine Dampfzuführleitung 7 sowie eine Milchzuführleitung 8, wobei letztere eingangsseitig mit einem Milchbehälter 9 verbunden ist. In die Milchzuführleitung 8 bzw. die Mischkammer 6 mündet zudem eine erste Luftzuführleitung 11. Über ein Zentralventil 10 sind eine Dampfzufuhr in der Dampfzuführleitung 7 sowie eine Luftzufuhr in der ersten Luftzuführleitung 11 einstellbar.

Wie dabei der Fig. 1 zu entnehmen ist, ist zusätzlich eine zweite, das Zentralventil 10 umgehende Luftzuführleitung 12 vorgesehen, in deren Verlauf die erste Einstelleinrichtung 5 angeordnet ist. Die zweite Luftzuführleitung 12 mündet dabei in die erste Luftzuführleitung 11 stromab des Zentralventils 10 und stromauf der Milchzuführleitung 8, so dass bei dieser Ausführungsform eine Luftzufuhr in die Mischkammer 6 sowohl über das Zentralventil 10 und die erste Luftzuführleitung 11 als auch bei Bedarf über die erste Einstelleinrichtung 5 und die zweite Luftzuführleitung 12 einstellbar sind.

Durch die erste Einstelleinrichtung 5 lässt sich somit ein Luftanteil, der der Mischkammer 6 zugeführt wird, individuell einstellen, wodurch individuelle Parameter des in der Mischkammer 6 herzustellenden Milchschaums, wie beispielsweise Qualität, Porenvolumen, Konsistenz, etc., individuell, analog zu einem bei Gastronomiegeräten bereits vielfach eingesetzten Barista-Modus einstellbar sind. Die erste Einstelleinrichtung 5 kann dabei eine Blende oder eine Drossel oder ein einstellbares Ventil sein. Mit dieser ersten Einstelleinrichtung 5 lässt sich die Milchschaumherstellung auch an unterschiedlichste Milchsorten, mit beispielsweise unterschiedlichen Fettgehalten, aber auch an unterschiedlichste Milchalternativen, wie beispielsweise Soja oder Hafer, anpassen und dadurch der Milchschäumprozess optimieren.

Generell ist es dabei möglich, dass über eine entsprechende Anzeigeeinrichtung des Kaffeeautomaten 3, beispielsweise einem Display, einem Kunden bzw. einer Kundin Fragen zur verwendeten Milchsorte bzw. Fragen zu gewünschten Milchschaumeigenschaften gestellt und anschließend die Einstellung sowohl des Zentralventils 10 als auch der ersten Einstelleinrichtung 5 automatisch, beispielsweise mittels einer Rechnereinrichtung, eingestellt werden. Zusätzlich oder alternativ ist es selbstverständlich auch denkbar, dass die erste Einstelleinrichtung 5 manuell und damit benutzerindividuell einstellbar ist, wodurch ein bislang ausschließlich für Gastronomiegeräte vorbehaltener Barista-Modus nun erstmals auf Heißgetränkezubereitungseinrichtungen 2 bzw. Kaffeeautomaten 3 im Consumerbereich übertragen werden kann.

Eine derartige separate erste Einstelleinrichtung 5 ermöglicht auch eine noch werksseitig durchzuführende Kalibrierung am sogenannten End-Off-Line-Test, wodurch Fertigungstoleranzen ausgeglichen werden können und eine gleichbleibend hohe Gerätequalität gewährleistet werden kann. Mittels der ersten Einstelleinrichtung 5 ist zudem denkbar, ein Abnutzungsverhalten über die Betriebsdauer bzw. Lebensdauer des Kaffeeautomaten 3 durch Nachjustieren zu kompensieren. Bei vernetzten Kaffeeautomaten 3 ist es zudem für einen Kundendienst möglich, bei Problemen mit dem Kaffeeautomaten 3 über Remote Control einen Milchschäumprozess zu optimieren oder Softwarefehler bzw. Prozessfehler zu beheben.

Zugleich kann mit dem erfindungsgemäßen Kaffeeautomaten 3 mit der ersten Einstelleinrichtung 5 in der zweiten Luftzuführleitung 12 ein bislang im Standard-Milchschäumprozess zwischen dem Zentralventil 10 und der Milchzuführleitung 8 entstehender Unterdruck vermieden werden, wodurch ein bislang dort oftmals eingebautes Rückschlagventil, welches ein unerwünschtes Ansaugen von Schmutz oder Dampf in den ersten Luftzuführkanal 11 verhindern soll, entfallen kann.

Das Zentralventil 10 kann dabei als Keramikventil ausgebildet sein und dadurch eine lange Lebensdauer aufweisen.

Wie bereits der Fig. 1 zu entnehmen ist, können über das Zentralventil 10 unterschiedlichste Schaltzustände und damit unterschiedlichste Dampfdurchflüsse in der Dampfzuführleitung 7 und Luftdurchflüsse in der ersten Luftzuführleitung 11 realisiert werden. Durch die in der zweiten Luftzuführleitung 12 zusätzlich angeordnete erste Einstelleinrichtung 5 ergeben sich weitere Möglichkeiten, die beispielhaft in der nachfolgenden Aufstellung aufgeführt sind. In dieser steht ein x für offen und eine 0 für geschlossen.

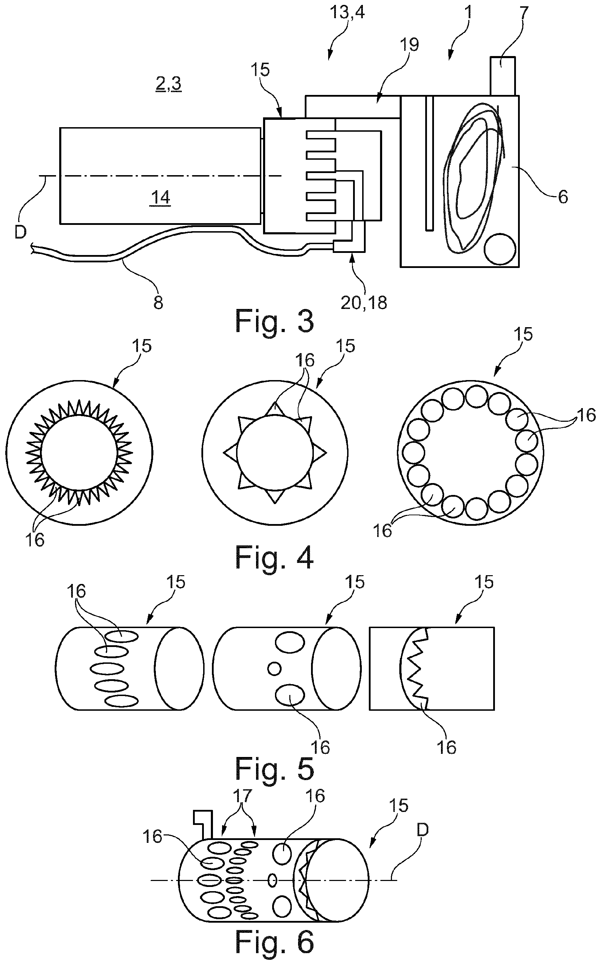

Betrachtet man nun eine weitere Ausführungsform des erfindungsgemäßen Milchschäumers 1 gemäß den Fig. 2 und 3, so kann man dort eine zweite Einstelleinrichtung 13 mit einem elektrischen Rotationsantrieb 14 und einem Steuerorgan 15 mit Durchbrüchen 16 erkennen. Das Steuerorgan 15 wird dabei mittels des elektrischen Rotationsantriebes 14 um eine Drehachse D angetrieben und ist zudem derart in der Milchzuführleitung 8 bzw. generell einem Sauganschluss 20 (vgl. auch Fig. 1) angeordnet, dass die Durchbrüche 16 des Steuerorgans 15 bei Rotation des Steuerorgans 15 den Milchzuführkanal 8 bzw. den Sauganschluss 20 periodisch fluidisch freigeben.

Gemäß der Ausführungsform entsprechend den Fig. 2 und 4 ist dabei das Steuerorgan 15 als Steuerscheibe ausgebildet, während es gemäß den Ausführungsformen entsprechend den Fig. 3 sowie 5 und 6 als Steuerzylinder ausgebildet ist. Bei den als Steuerscheiben ausgebildeten Steuerorganen 15 sind die Durchbrüche 16 in Axialrichtung, das heißt gemäß der Fig. 2 parallel zur Blattebene und gemäß der Fig. 4 orthogonal zur Blattebene ausgerichtet, während sie bei einem als Steuerzylinder ausgebildeten Steuerorgan 15, wie dies gemäß den Fig. 3 sowie 5 und 6 dargestellt ist, radial zur Drehachse D orientiert sind.

Das als Steuerzylinder ausgebildete Steuerorgan 15 gemäß der Fig. 6 weist zudem axial beabstandet zueinander angeordnete, zumindest teilweise umlaufende Reihen 17 an Durchbrüchen 16 mit zugleich unterschiedlicher Geometrie auf, so dass der Steuerzylinder durch eine Axialverschiebung mit unterschiedlichen Reihen 17 an Durchbrüchen 16 mit der Milchzuführleitung 8 in Eingriff gebracht werden kann. Neben unterschiedlich großen Durchbrüchen 16 kann die Steuerung eines Milchdurchflusses in der Milchzuführleitung 8 mittels der zweiten Einstelleinrichtung 13 selbstverständlich auch noch über die Drehzahl des Steuerorgans 12 eingestellt werden, wodurch die Frequenz des angesaugten Massenstroms der Milch beeinflussbar ist.

Das als Steuerscheibe ausgebildete Steuerorgan 15 kann von dem elektrischen Rotationsantrieb 14 direkt oder indirekt über einen Riementrieb bzw. ein Getriebe angetrieben sein und ist zwischen einer Schlauchaufnahme 18 und einem Ankoppelelement 19, beispielsweise einem Hohl-Kegelstumpf, geführt. Eine Dichtung erfolgt dabei beispielsweise über Dichtelemente an der Schlauchaufnahme 18 und am Ankopplungselement 19.

Dabei ist selbstverständlich klar, dass in der erfindungsgemäßen Heißgetränkezubereitungseinrichtung 2 bzw. dem erfindungsgemäßen Kaffeeautomaten 3 sowohl die erste Einstelleinrichtung 5 als auch die zweite Einstelleinrichtung 13 oder wahlweise diese alternativ zum Einsatz kommen können.

Mit dem erfindungsgemäßen Milchschäumer 1 bzw. dem erfindungsgemäßen Kaffeeautomaten 3 ist es erstmals konstruktiv vergleichsweise einfach möglich, einen bislang ausschließlich für Gastronomiegeräte vorbehaltenen Barista-Modus nun auf Consumergeräte zu übertragen und dadurch einem Kunden bzw. einer Kundin völlig neue Einstellmöglichkeiten hinsichtlich der Eigenschaften von Milchschaum zu eröffnen.

### Bezugszeichenliste

- 1: Milchschäumer
- 2: Heißgetränkezubereitungseinrichtung
- 3: Kaffeeautomat
- 4: Einstellanordnung
- 5: erste Einstelleinrichtung
- 6: Mischkammer
- 7: Dampfzuführleitung
- 8: Milchzuführleitung
- 9: Milchbehälter
- 10: Zentralventil
- 11: erste Luftzuführleitung
- 12: zweite Luftzuführleitung
- 13: zweite Einstelleinrichtung
- 14: Rotationsantrieb
- 15: Steuerorgan
- 16: Durchbruch
- 17: Reihe
- 18: Schlauchaufnahme
- 19: Ankoppelelement
- 20: Sauganschluss als Ansaugstelle

- D: Drehachse

## Patentansprüche

1. Milchschäumer (1) zum Aufschäumen von Milch für eine Heißgetränkezubereitungseinrichtung (2), insbesondere für einen Kaffeeautomaten (3), mit einer Einstellanordnung (4) zum Variieren einer Beschaffenheit von Milchschaum, wobei die Einstellanordnung (4) eine erste Einstelleinrichtung (5) und/oder eine zweite Einstelleinrichtung (13) aufweist, wobei über die erste Einstelleinrichtung (5) eine Einstellung eines einer Mischkammer (6) des Milchschäumers (1) zuzuführenden Luftstroms möglich ist, während über die zweite Einstelleinrichtung (13) eine Einstellung eines der Mischkammer (6) zuzuführenden Milchstroms möglich ist.

2. Milchschäumer nach Anspruch 1, **dadurch gekennzeichnet, dass** in die Mischkammer (6) eine Dampfzuführleitung (7) und eine Milchzuführleitung (8) münden, wobei zudem eine erste Luftzuführleitung (11) vorgesehen ist, die in die Milchzuführleitung (8) mündet und wobei ein Zentralventil (10) vorgesehen ist, über welches eine Dampfzufuhr in der Dampfzuführleitung (7) und eine Luftzufuhr in der ersten Luftzuführleitung (11) einstellbar sind, und wobei eine zweite, das Zentralventil (10) umgehende Luftzuführleitung (12) vorgesehen ist, die stromab des Zentralventils (10) und stromauf der Milchzuführleitung (8) in die erste Luftzuführleitung (11) mündet und wobei in der zweiten Luftzuführleitung (12) die erste Einstelleinrichtung (5) zur Einstellung eines Luftstroms in der zweiten Luftzuführleitung (12) und darüber auch zur Einstellung eines der Mischkammer (6) zuzuführenden Luftstroms angeordnet ist.

3. Milchschäumer nach Anspruch 2, **dadurch gekennzeichnet, dass** das Zentralventil (10) als Keramikventil ausgebildet ist.

4. Milchschäumer nach Anspruch 2 oder 3, **dadurch gekennzeichnet, dass** das Zentralventil (10) und die erste Einstelleinrichtung (5) zumindest folgende Stellungen mit folgenden Ergebnissen einnehmen können, wobei x = offen und 0 = geschlossen bedeutet:
| Nr. | Zentralventil | | Erste Einstelleinrichtung | Ergebnis |
|---|---|---|---|---|
| | Dampfzufuhr | Luftzufuhr | | |
| 1 | x | x | x | variabler Milchschaum "groß" |
| 2 | x | 0 | 0 | Heißmilch |
| 3 | x | 0 | x | variabler Milchschaum "klein" |
| 4 | x | x | 0 | Standard Milchschaum |
| 5 | 0 | 0 | x | Entlüftung erster + zweiter Luftzuführkanal |
| 6 | x | x | x | Blockstellung |

5. Milchschäumer nach einem der Ansprüche 1 bis 4, **dadurch gekennzeichnet, dass** die erste Einstelleinrichtung (5) manuell betätigbar ist und neben einer Offenstellung und einer Geschlossenstellung auch beliebige Zwischenstellungen einnehmen kann.

6. Milchschäumer nach einem der vorhergehenden Ansprüche, **dadurch gekennzeichnet, dass** die zweite Einstelleinrichtung (13) einen elektrischen Rotationsantrieb (14) und ein Steuerorgan (15) mit Durchbrüchen (16) umfasst, wobei mittels des elektrischen Rotationsantriebs (14) das Steuerorgan (15) um eine Drehachse (D) drehantreibbar ist, wobei das Steuerorgan (15) so in der Milchzuführleitung (8) oder einem Sauganschluss (20) angeordnet ist, dass die Durchbrüche (16) des Steuerorgans (15) bei Rotation des Steuerorgans (15) den Milchzuführkanal (8) oder den Sauganschluss (20) periodisch fluidisch freigeben.

7. Milchschäumer nach Anspruch 6, **dadurch gekennzeichnet, dass** das Steuerorgan (15) eine Steuerscheibe mit axial ausgenommenen Durchbrüchen (16) aufweist.

8. Milchschäumer nach Anspruch 6, **dadurch gekennzeichnet, dass** das Steuerorgan (15) einen Steuerzylinder mit radial ausgenommenen Durchbrüchen (16) aufweist.

9. Milchschäumer nach Anspruch 8, **dadurch gekennzeichnet, dass** das als Steuerzylinder ausgebildete Steuerorgan (15) axial beabstandet zueinander angeordnete zumindest teilweise umlaufende Reihen (17) an Durchbrüchen (16) unterschiedlicher Geometrie aufweist und der gegenüber der Milchzuführleitung (8) oder dem Sauganschluss (20) zum wahlweisen In-Eingriff-Bringen einer der Reihen (17) mit der Milchzuführleitung (8) oder dem Sauganschluss (20) axial verstellbar ist.

10. Heißgetränkezubereitungseinrichtung (2), insbesondere ein Kaffeeautomat (3), mit einem Milchschäumer (1) nach einem der vorhergehenden Ansprüche und mit einem Milchbehälter (9) zur Aufnahme von Milch, der mit der Milchzuführleitung (8) verbunden ist.
